# EUROPÄISCHE PATENTANMELDUNG

(11) **EP 1 813 372 A2**
(43) Veröffentlichungstag der Anmeldung: **01.08.2007**
(21) Anmeldenummer: 06026850.5
(22) Anmeldetag: 23.12.2006
(51) Int. Cl.: B23F 21/16

(54) **Wälzfräser**

(30) Priorität: 25.01.2006 DE 20601112 U
(71) Anmelder: Fette GmbH, 21493 Schwarzenbek (DE)
(72) Erfinder: Jacob, Thomas, 21502 Geesthacht (DE); Schlisio, Klaus-Dieter, 21514 Büchen (DE)
(74) Vertreter: Hauck Patent- und Rechtsanwälte

(57) **Zusammenfassung**

Wälzfräser mit einem Fräskörper, der am Umfang mindestens einen schraubenlinieförmigen Gang oder mehrere ringförmige Gänge aufweist mit Flanken zu beiden Seiten eines Gangscheitels, wobei an den Flanken abwechselnd Wendeschneidplatten mittels Schrauben befestigt sind, und die Wendeschneidplatten sich bis in den Gangscheitel hineinerstrecken, wobei ferner die Schneiden benachbarter Fräsgänge vorzugsweise einen drallförmigen Versatz zu einer Linie aufweisen, die parallel zur Achse des Fräskörpers verläuft und wobei den Wendeschneidplatten radial nach außen offene Spankammern zugeordnet sind, die sich quer durch den Gangscheitel hinwegerstrecken, wobei die Schneiden der Wendeschneidplatten benachbarter Gänge so versetzt zueinander angeordnet sind, daß ein gerader Schaft eines Schraubendrehers durch einen scheitelnahen Bereich der Spankammern geführt werden kann, um mit einer Befestigungsschraube einer Wendeschneidplatte auf dem benachbarten Gang in Eingriff gebracht zu werden.

## Beschreibung

Die Erfindung bezieht sich auf einen Wälzfräser nach dem Patentanspruch 1.

Aus DE 27 00 525 A1 sind Wälzfräser bekannt geworden, bei denen die aus Hartmetall bestehenden Wendeschneidplatten schraubenlinienförmig verteilt auf scheibenförmigen Zahnkränzen angeordnet sind.

Aus DE 80 27 631 U1 ist ein Wälzfräser bekannt geworden, bei dem auf einem Grundkörper mehrere gleichartige, schraubenförmig verlaufende Zahnsegmente in einer gewindeförmigen Führung des Grundkörpers unter einem drallförmigen Versatz der Schneiden von Wendeschneidplatten benachbarter Fräsergänge zur achsparallelen Mittellinie angeordnet sind. Die Zähne tragen wechselseitig aufeinanderfolgend Wendeschneidplatten. Außerdem sind am Fuß der Zähne wechselseitige aufeinanderfolgende zusätzliche Wendeplatten vorgesehen.

Die Wendeschneidplatten werden bekannterweise mittels Schrauben an den Flanken der Scheiben oder Zahnsegmente befestigt. Da zumeist eine sehr große Anzahl von Wendeschneidplatten an einem Wälzfräser angeordnet sind, müssen viele Schrauben gelöst und festgezogen werden, wenn die Wendeschneidplatten ausgetauscht werden sollen. Da die ringförmigen oder schraubenlinienförmigen Gänge der Wälzfräser z.B. oft sehr nahe beieinander liegen, bedarf es eines Spezialschlüssels, um die Schraubenköpfe zu erreichen und zu betätigen.

Der Erfindung liegt die Aufgabe zugrunde, einen Wälzfräser mit Wendeschneidplatten zu schaffen, bei dem das Anbringen und das Entfernen von Wendeschneidplatten erleichtert und die Montage- und Demontagezeit erheblich verkürzt wird.

Diese Aufgabe wird durch die Merkmale des Patentanspruchs 1 gelöst.

Bei dem erfindungsgemäßen Wälzfräser sind die Schneiden der Wendeschneidplatten benachbarter Gänge zueinander versetzt angeordnet, vorzugsweise um etwa eine halbe Teilung.

Die Wendeschneidplatten sind bei derartigen Wälzfräsern in einer bestimmten Teilung angeordnet. Wird die Teilung auf einem Gang so gewählt, daß der benachbarte Gang in der Teilung z.B. um eine Hälfte versetzt ist, liegen die Wendeschneidplatten eines Gangs jeweils in der Lücke der Wendeschneidplatten benachbarter Gänge, in Achsrichtung des Wälzfräsers gesehen. Den Schneiden der Wendeschneidplatten sind Spankammern zugeordnet. Sind die Spankammern radial nach außen geöffnet, d.h. bilden sie im Scheitel der Gänge, z.B. der Zahnsegmente, eine Ausnehmung, kann auf diese Weise mit einem einfachen Drehwerkzeug durch eine Spankammer hindurch die Schraube der Wendeplatte auf dem benachbarten Gang erfaßt werden. Mithin sind die Schrauben der Wendeplatten des erfindungsgemäßen Wälzfräsers mit einem einfachen Schrauber bequem erreichbar und können auf diese Weise rasch gelöst oder angezogen werden, z.B. auch mit motorisch betriebenen Schraubern. Das Umrüsten eines Wälzfräsers mit Wendeschneidplatten wird daher vereinfacht und in seiner Zeit deutlich verkürzt.

Ein weiterer Vorteil des erfindungsgemäßen Wälzfräsers liegt in dem vibrationsarmen Fräsen bei einer gedrallten Schneidenanordnung. Durch den Wechsel von linken und rechten Schneiden neutralisieren sich die Schnittkräfte.

Ein Ausführungsbeispiel der Erfindung soll nachfolgend anhand von Zeichnungen näher erläutert werden.

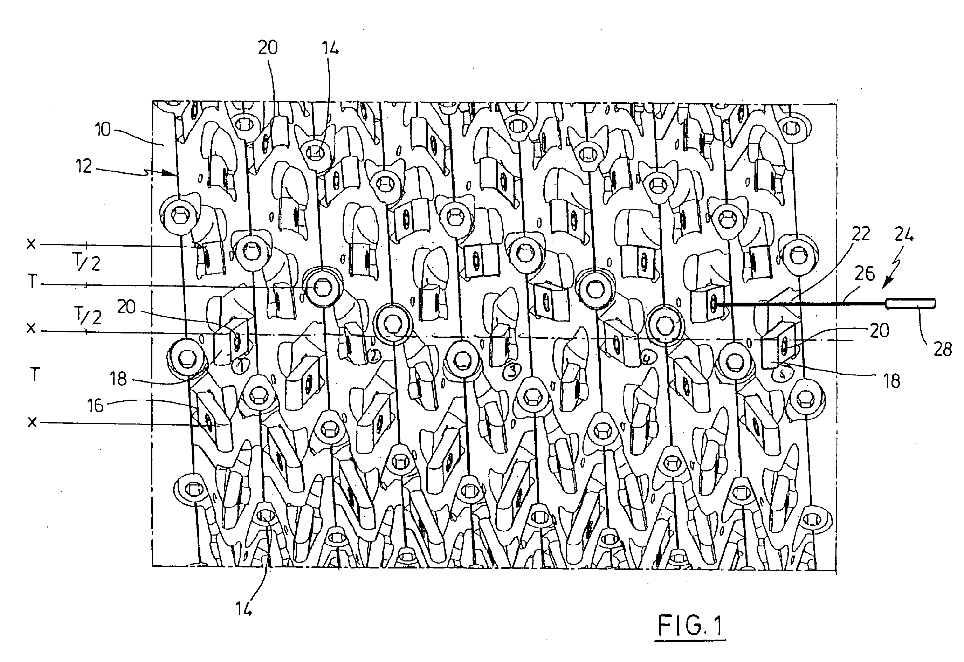

- Fig. 1: zeigt einen abgewickelten Teil eines Wälzfräsers nach der Erfindung.
- Fig. 2: zeigt eine Seitenansicht eines Teils eines Wälzfräsers nach der Erfindung und den Einsatz eines Schraubendrehers.

Ein nicht gezeigter Grundkörper trägt einzelne Zahnsegmente 10 in einer gewindeartigen Führung. Eine solche Konstruktion ist etwa aus DE 80 27 631 U1 offenbart. Die Zahnsegmente 10 sind gleichartig und verlaufen schraubenlinienförrnig. Auf diese Weise sind benachbarte Kränze 12 oder Gänge gebildet, wobei die Zahnsegmente mit Hilfe von Schrauben 14 am nicht gezeigten Grundkörper befestigt sind. Die Befestigungsanordnung ist derart, daß die Schrauben Zahnsegmente benachbarter Gänge gemeinsam festlegen. Auf den Zahnsegmente 10 sind erste Wendeschneidplatten 16 und zweite Wendeschneidplatten 18 mit Hilfe von Schrauben 20 befestigt. Die Befestigung erfolgt an den Flanken der Segmente bzw. der Gänge, wobei sich die Schrauben 20 annähernd senkrecht zu den Flanken erstrecken. Die Wendeschneidplatten 16 liegen auf der einen Seite (Flanke) der Zahnsegmente 10 (auf der linken Seite der Figur), während die Wendeschneidplatten 18 auf der gegenüberliegenden Seite der Zahnsegmente 10 angeordnet sind. Die Wendeschneidplatten 16, 18 sind in einer vorgegebenen Teilung T an den Zahnsegmenten 10 befestigt. Wie aus den Figuren ersichtlich, sind die Wendeschneidplatten 16, 18 auf dem benachbarten Gang um eine halbe Teilung T/2 versetzt angeordnet.

Den Wendeschneidplatten 16, 18 sind Spankammern 22 zugeordnet. Die Spankammern 22 erstrecken sich durch den Scheitel der Zahnsegmente 10, und liegen ebenfalls bezüglich benachbarter Gänge versetzt, so ist es möglich, mit einem einfachen Schraubendreher die Schrauben 20 der Wendeschneidplatten 16, 18 zu erreichen, wie dies für einen schematisch angedeuteten Schraubendreher 24 gezeigt ist, der einen geraden Schaft 26 und einen Griff 28 aufweist. Alternativ kann natürlich auch ein motorisch betriebener Drehschrauber verwendet werden. Der Schaft 26 wird durch den scheitelnahen Bereich einer Spankammer 22 geführt, und sein Ende kann mit der zugekehrten Befestigungsschraube 20 des benachbarten Gangs in Eingriff treten.

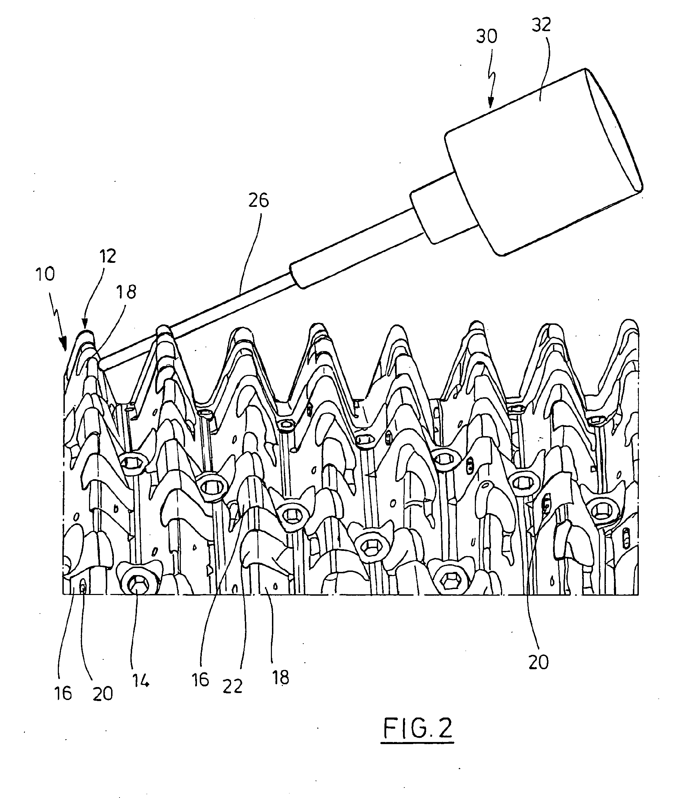

In Fig. 2 ist ein motorischer Schrauber 30 angedeutet, wobei der Antrieb des Schaftes 26 in einem Gehäuse 32 untergebracht ist.

Wie ferner aus den Figuren zu erkennen, liegen die Schneiden der Wendeschneidplatten 16, 18 der jeweils übernächsten Gänge auf einer gemeinsamen Ebene, wobei die Wendeschneidplatten 16, 18 einander abwechseln. Insgesamt erzeugt diese Anordnung ein vibrationsarmes Fräsen, da die Schneidenanordnung im übrigen gedrallt ist. Durch den Wechsel der linken und rechten Schneiden neutralisieren sich die Schnittkräfte.

Statt einzelner Zahnsegmenten können auch z.B. Zahnscheiben als Träger für die Windeschneidplatten verwendet werden, die nebeneinander aufgereiht werden.

## Patentansprüche

1. Wälzfräser mit einem Fräskörper, der am Umfang mindestens einen schraubenlinieförmigen Gang oder mehrere ringförmige Gänge aufweist mit Flanken zu beiden Seiten eines Gangscheitels, wobei an den Flanken abwechselnd Wendeschneidplatten mittels Schrauben befestigt sind, und die Wendeschneidplatten sich bis in den Gangscheitel hineinerstrecken, wobei ferner die Schneiden benachbarter Fräsgänge vorzugsweise einen drallförmigen Versatz zu einer Linie aufweisen, die parallel zur Achse des Fräskörpers verläuft und wobei den Wendeschneidplatten radial nach außen offene Spankammern zugeordnet sind, die sich quer durch den Gangscheitel hinwegerstrecken, **dadurch gekennzeichnet, daß** die Schneiden der Wendeschneidplatten (16, 18) benachbarter Gänge (12) so versetzt zueinander angeordnet sind, daß ein gerader Schaft (26) eines Schraubendrehers (24, 30) durch einen scheitelnahen Bereich der Spankammern (22) geführt werden kann, um mit einer Befestigungsschraube (20) einer Wendeschneidplatte (16, 18) auf dem benachbarten Gang (12) in Eingriff gebracht zu werden.

2. Wälzfräser nach Anspruch 1, **dadurch gekennzeichnet, daß** auf einem Grundkörper mehrere gleichartige schraubenlinienförmig hintereinander angeordnete Zahnsegmente vorgesehen sind, die mittels Schrauben (14) am Grundkörper befestigt sind.

3. Wälzfräser nach Anspruch 1, **dadurch gekennzeichnet, daß** der Fräskörper nebeneinander angeordnete Scheiben aufweist mit Flanken und einem Scheitel.

4. Wälzfräser nach einem der Ansprüche 1 bis 3, **dadurch gekennzeichnet, daß** die Schneiden der Wendeschneidplatte (16, 18) benachbarter Gänge (12) etwa um eine halbe Teilung T/2 zueinander versetzt angeordnet sind.
